# EUROPEAN PATENT SPECIFICATION

(11) **EP 0 571 155 B1**
(45) Date of publication and mention of the grant of the patent: **28.08.1996**
(21) Application number: 93303778.0
(22) Date of filing: 17.05.1993
(51) Int. Cl.: H02K 3/32, H02K 15/12

(54) **Coating material for armature coil of a motor for electrical equipment**
Beschichtungsstoff für die Ankerspule eines Motors für eine elektrische Ausrüstung
Matériau d'enrobage pour la bobine d'induit d'un moteur pour un équipement électrique

(30) Priority: 18.05.1992 JP 149980/92
(43) Date of publication of application: 24.11.1993
(73) Proprietor: MITSUBA ELECTRIC MANUFACTURING CO., LTD., Kiryu-shi, Gunma-ken (JP)
(72) Inventor: Onodera, Tsugio, Sawa-Gun, Gunma-Ken (JP)
(74) Representative: Smith, Norman Ian

(56) References cited:
- US-A- 2 846 599

## Description

### Background of the Invention

### Field of the Invention:

The present invention relates to a coating material for an armature coil of a motor for electrical equipment. The motor can be, for example, a starter motor, a wiper motor, a power window motor, a power seat motor or a sunroof motor.

### Description of the Related Art:

In the above-described type of motors for electrical equipment, a copper armature core, which is wound around a slot formed in an iron armature core, is fixed to the armature core by coating a resin coating material (fillers) on the armature coil by impregnation. Consequently, in such a motor, even when the armature is rotated at a high speed, abrasion of the armature coil or projection of the armature coil from the slot is eliminated, thus eliminating breakage of the coil or peeling-off of an insulating film which impairs the insulation property. Therefore, a reliable motor is provided.

Motors for the electrical equipment may be installed near an engine, such as a starter motor. Such motors are heated to 150 °C or above when the engine heated to a high temperature. The vehicle may be parked in a severe cold region where the temperature may fall to -40 °C or below. Thus, the requirement of the motor is that the motor can withstand such a great temperature difference.

However, it is difficult for the conventional motor to withstand such a great temperature difference.
Consequently, the coating material may be cracked, making the motor unreliable. Hence, the present inventors made intensive studies regarding the reasons for crack generation, found that crack generation has a relation with the coefficient of thermal expansion of the coating material, and completed the present invention on the basis of the obtained knowledges.

US-A-2846599 proposed using a sealing material which had substantially the same temperature coefficient of expansion as the metals of the core and coil.

### Summary of the Invention

In view of the aforementioned problems of the prior art, an object of the present invention is to provide a coating material for an armature coil for a motor for electrical equipment which is capable of overcoming the aforementioned problems.

According to the present invention there is provided a coating material for an armature coil of a motor for electrical equipment in which the armature coil is made of copper and wound around a slot formed in an armature core made of iron wherein said coating material is coated on said armature coil by impregnation to fix said armature coil to said armature core, characterised in that said coating material is made of a resin which is cross-linked to adjust the coefficient of thermal expansion to a value which is between the coefficient of thermal expansion of copper and the coefficient of thermal expansion of iron.

The invention also provides a method for forming an armature coil using such a material.

It is therefore possible according to the present invention to effectively eliminate generation of cracks in the coating material due to a great temperature difference.

The invention will be described now by way of example only, with reference to the accompanying drawings. In the drawings:

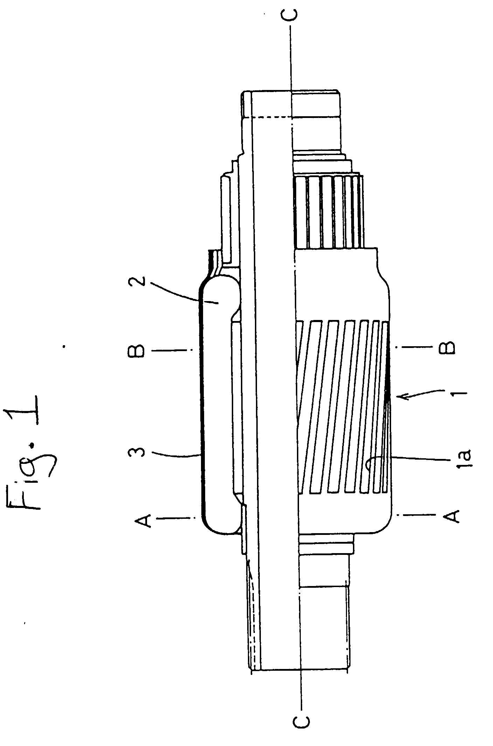

Fig. 1 is a front view, with part broken away, of an armature core, and

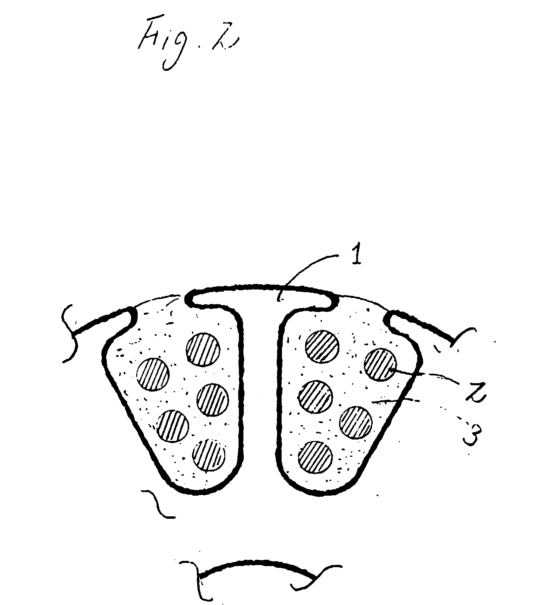

Fig. 2 is a B-B cross section of an armature core.

### Description of the Preferred Embodiment

An embodiment of the present invention will be described below with reference to the accompanying drawing. In the figure, reference numeral 1 denotes an armature core which constitutes a motor for the electrical equipment. The armature core 1 is an assembly of a plurality of thin plat-like laminations of a core material made of iron. An armature coil 2 made of copper is wound around a slot la formed in the armature core 1. A resin coating material is coated on the armature core 1 with the armature coil 2 wound around by impregnation to fix the armature coil 2 to the armature core 1.

The present inventors conducted experiments in the manner described below to examine the relation between the coefficient of thermal expansion and crack generation. That is, the present inventors carried out the simulation test in the manner described below. First, the armature cores 1 were manufactured. These armature cores 1 were coated by impregnation with substantially the same amount of coating materials 3 having different coefficients of thermal expansion shown below under substantially the same conditions. Each of the manufactured armature cores 1 was rotated at a speed of 2000 revolutions/min (rpm) while the temperature of the atmosphere thereof was raised from -50 °C to 200 °C in 10 minutes. At 200 °C, the armature core 1 was rotated for another 20 minutes. After the rotation of the armature core 1 was stopped, the temperature of the atmosphere was cooled from 200 °C to -50 °C in 30 minutes, and was then maintained to -50 °C for 20 minutes. A series of the above-described operations were repeated 20 times. Thereafter, the armature core 1 was removed to observe incidence of crack generation in the coating material 3. The coating materials 3 selected in the above-described simulation test were diallyl phthalate impregnated with 70% of glass fiber. Four types of coating materials respectively having coefficients of thermal expansion (which are coefficients of linear expansion) of 2.55 x 10⁻⁵ (comparative example 1), 1.96 x 10⁻⁵ (comparative example 2), 1.51 x 10⁻⁵ (example 1) and 1.36 x 10⁻⁵ (example 2) were prepared. The coefficient of thermal expansion of each of the coating materials was adjusted by crosslinking (bridging) of styrene oligomer. To take variations in the tests into account, three coating material samples were used in each of the tests. Table 1 shows the results of the tests. Crack generation was evaluated by visually observing the sliced two surfaces of a coil end portion A of the armature core 1, the sliced two surfaces of a core portion B thereof, and the two axially cut surfaces of an armature core portion C.

**TABLE 1**

| Sample | No. | Coefficient of Thermal Expansion (x 10⁻⁵) | Incidence of Crack Generation | | |
|---|---|---|---|---|---|
| | | | Portion A | Portion B | Portion C |
| Example 1 | 1 | 1.51 | Non | Non | Slightly Generated |
| | 2 | 1.51 | Non | Non | Non |
| | 3 | 1.51 | Slightly Generated | Non | Non |
| Example 2 | 1 | 1.36 | Non | Non | Non |
| | 2 | 1.36 | Non | Non | Non |
| | 3 | 1.36 | Non | Non | Non |
| Comparative Example 1 | 1 | 2.55 | High Occurence | High Occurence | High Occurence |
| | 2 | 2.55 | High Occurence | Moderate Occurence | High Occurence |
| | 3 | 2.55 | Moderate Occurence | High Occurence | High Occurence |
| Comparative Example 2 | 1 | 1.96 | High Occurence | Slight Occurence | Slight Occurence |
| | 2 | 1.96 | Moderate Occurence | Slight Occurence | Moderate Occurence |
| | 3 | 1.96 | Moderate Occurence | Slight Occurence | High Occurence |

It is clear from Table 1 that crack generation was observed more or less in Comparative Examples 1 and 2 in which the coating materials 3 had a high coefficient of thermal expansion and that no crack was generated at all or cracks were generated at a low level that does not matter at all in Examples 1 and 2. That is, the coefficient of thermal expansion of iron which is the material of the armature core 1 is about 1.15 x 10⁻⁵. The coefficient of linear expansion of copper which is the material of the armature coil 2 ranges from 1.54 x 10⁻⁵ to 1.62 x 10⁻⁵. In Examples 1 and 2 in which substantially no crack was generated, the coefficients of thermal expansion of the coating materials 3 were 1.51 x 10⁻⁵ and 1.36 x 10⁻⁵, which were between the coefficient of thermal expansion of iron and that of copper. It can therefore be inferred from the above-mentioned results that generation of cracks in the coating material 3 due to a temperature difference is greatly affected by the coefficient of thermal expansion thereof which differs in materials. Thus, even in the motor which is disposed at a site where there is a great temperature difference, generation of cracks can be effectively avoided by using the coating material 3 having a coefficient of thermal expansion which is between the coefficient of thermal expansion of iron and that of copper, like the above-described examples. As a result, the reliability of the motor is improved.

Besides a diallyl phthalate resin, an unsaturated polyester resin or an epoxy resin can also be used as the main component of the coating material. Such a resin is crosslinked (bridged) using a crosslinking (bridging) agent, such as styrene oligomer or allyl oligomer, to adjust the coefficient of thermal expansion thereof to a value between the coefficient of thermal expansion of iron and that of copper. The present inventors conducted the same experiments as the above-described ones using such coating materials, and obtained the same results.

As will be understood from the foregoing description, generation of cracks due to a temperature difference can be effectively avoided by using the coating material having a coefficient of thermal expansion which is between the coefficient of thermal expansion of iron and that of copper. Consequently, even when the motor is used at a site where there is a great temperature difference, it can be used reliably.

## Claims

1. A coating material for an armature coil of a motor for electrical equipment in which the armature coil (2) is made of copper and wound around a slot formed in an armature core (1) made of iron,
wherein said coating material is coated on said armature coil (2) by impregnation to fix said armature coil to said armature core (1), characterised in that said coating material is made of a resin which is cross-linked to adjust the coefficient of thermal expansion to a value which is between the coefficient of thermal expansion of copper and the coefficient of thermal expansion of iron.

2. A coating material according to claim 1, wherein said resin coating material prevents projection of said armature coil from said armature core due to centrifugal force generated when said armature core is rotation at high speeds.

3. A coating material according to claim 1, wherein said resin coating material prevents cracking of said armature core after said armature core is repeatedly exposed to high temperature differentials and rotation at high speeds.

4. A coating material according to claim 1, wherein said resin coating material is impregnated into said armature core and on a connecting portion of said armature coil, said connecting portion electrically connecting said armature coil to a commutator of said electrical motor.

5. A method of forming an armature coil for a motor for use in electrical equipment comprising winding an armature coil made of copper around a slot in an armature core made of iron and coating the armature coil with a coating material to fix the armature coil to said armature core, characterised in that the coating material is made of a resin which is cross-linked to adjust the coefficient of thermal expansion to a value which is between that of copper and iron.

## Revendications

1. Un matériau d'enrobage pour une bobine d'induit d'un moteur pour un équipement électrique dans lequel la bobine d'induit (2) est réalisée en cuivre et enroulée autour d'une fente formée dans un noyau d'induit (1) réalisé en fer,
dans lequel ledit matériau d'enrobage est amené à enrober ladite bobine d'induit (2) par imprégnation afin de fixer ladite bobine d'induit audit noyau d'induit (1), caractérisé en ce que ledit matériau d'enrobage est réalisé en une résine qui est réticulée pour régler le coefficient de dilatation thermique à une valeur qui soit entre le coefficient de dilatation thermique du cuivre et le coefficient de dilatation thermique du fer.

2. Un matériau d'enrobage selon la revendication 1, dans lequel ledit matériau d'enrobage en résine empêche que ladite bobine d'induit sorte dudit noyau d'induit du fait de la force centrifuge produite lorsque ledit noyau d'induit tourne à des vitesses élevées.

3. Un matériau d'enrobage selon la revendication 1, dans lequel ledit matériau d'enrobage en résine évite au noyau d'induit de se fissurer après que ledit noyau d'induit a été exposé de manière répétée à des différentiels de température élevés et à une rotation à des vitesses élevées.

4. Un matériau d'enrobage selon la revendication 1, dans lequel ledit matériau d'enrobage en résine est imprégné dans ledit noyau d'induit et sur une partie de liaison de ladite bobine d'induit, ladite partie de liaison reliant de manière électrique ladite bobine d'induit à un collecteur dudit moteur électrique.

5. Un procédé de formation d'une bobine d'induit pour un moteur utilisable dans un équipement électrique comprenant le fait d'enrouler une bobine d'induit réalisée en cuivre autour d'une fente d'un noyau d'induit réalisé en fer et revêtir la bobine d'induit d'une matière de revêtement afin de fixer la bobine d'induit audit noyau d'induit, caractérisé en ce que la matière de revêtement est réalisée en une résine qui est réticulée pour régler le coefficient de dilatation thermique a une valeur qui soit entre celle du cuivre et celle du fer.

## Patentansprüche

1. Beschichtungsmaterial für die Wicklung des elektromagnetischen Stellgliedes eines Motors für elektrische Einrichtungen, wobei die Wicklung (2) aus Kupfer besteht und um einen Schlitz in einem Stellgliedkern (1) aus Eisen herumgewickelt ist,
wobei das Beschichtungsmaterial zum Beschichten der Wicklung (2) dieser durch Imprägnieren zugeordnet ist, um die Wicklung (2) dem Stellgliedkern (1) fest zuzuordnen,
**dadurch gekennzeichnet, daß** das Beschichtungsmaterial aus einem Harz besteht, das Querbindungen aufweist, um den thermischen Ausdehnungskoeffizienten auf einen Wert festzulegen, der im Bereich zwischen dem thermischen Ausdehnungskoeffizienten von Kupfer und dem thermischen Ausdehnungskoeffizienten von Eisen liegt.

2. Beschichtungsmaterial nach Anspruch 1, bei dem das Material der Harzbeschichtung verhindert, daß sich die Stellgliedwicklung unter dem Einfluß der Fliehkraft vom Stellgliedkern entfernt, die sich bei hohen Drehzahlen des Stellgliedkerns ausbildet.

3. Beschichtungsmaterial nach Anspruch 1, bei dem das Material der Harzbeschichtung ein Brechen des Stellgliedkerns auch dann verhindert, wenn der Stellgliedkern bei hohen Drehzahlen großen Temperaturschwankungen ausgesetzt ist.

4. Beschichtungsmaterial nach Anspruch 1, bei dem das Material der Harzbeschichtung dem Stellgliedkern in der Weise durch Imprägnieren zugeordnet ist, daß im Bereich der Verbindung zwischen Stellgliedkern und Stellgliedwicklung eine elektrische Verbindung zwischen der Wicklung und einem Kommutator des Elektromotors besteht.

5. Verfahren zum Herstellen einer Wicklung eines Motors für eine elektrische Einrichtung mit dem Aufwickeln einer Wicklung aus Kupfer um einen Schlitz im Stellgliedkern aus Eisen und zum Beschichten der Stellgliedwicklung mit einem Beschichtungsmaterial, um die Stellgliedwicklung auf dem Stellgliedkern zu befestigen, **dadurch gekennzeichnet, daß** das Beschichtungsmaterial aus einem Harz mit Querbindungen hergestellt ist derart, daß der thermische Ausdehnungskoeffizient auf einen Wert zwischen dem von Kupfer und Eisen eingestellt ist.
